(19) Europäisches Patentamt
European Patent Office
Office européen des brevets

(11) **EP 4 393 694 A1**

(12) **EUROPEAN PATENT APPLICATION**

(43) Date of publication:
**03.07.2024 Bulletin 2024/27**

(21) Application number: **24155151.4**

(22) Date of filing: **12.11.2021**

(51) International Patent Classification (IPC):
**B32B 1/08** *(2006.01)*  **B32B 3/18** *(2006.01)*
**B32B 3/28** *(2006.01)*  **B32B 3/30** *(2006.01)*
**B32B 7/12** *(2006.01)*  **B32B 7/14** *(2006.01)*
**B32B 29/00** *(2006.01)*  **B32B 29/08** *(2006.01)*
**B32B 3/26** *(2006.01)*  **B32B 1/00** *(2024.01)*

(52) Cooperative Patent Classification (CPC):
**B32B 1/08; B32B 1/00; B32B 3/18; B32B 3/266;**
**B32B 3/28; B32B 3/30; B32B 7/12; B32B 7/14;**
**B32B 29/005; B32B 29/007; B32B 29/08;**
B32B 2255/02; B32B 2255/12; B32B 2255/205;
B32B 2272/00;                                (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **12.11.2020  GB 202017874**
**26.03.2021  GB 202104365**

(62) Document number(s) of the earlier application(s) in
accordance with Art. 76 EPC:
**21820119.2 / 4 244 052**

(71) Applicant: **Softbox Systems Limited**
**Long Crendon, Buckingham HP18 9BF (GB)**

(72) Inventors:
• **TATTAM, Edwin**
**Long Crendon, HP18 9BF (GB)**
• **KUHN, Baptiste**
**Long Crendon, HP18 9BF (GB)**
• **O'HARA, Padraic**
**Long Crendon, HP18 9BF (GB)**

(74) Representative: **WBH Wachenhausen**
**Patentanwälte PartG mbB**
**Müllerstraße 40**
**80469 München (DE)**

Remarks:
This application was filed on 01-02-2024 as a
divisional application to the application mentioned
under INID code 62.

(54) **A THERMAL CONTROL BOARD AND INSULATING TRANSPORT AND STORAGE CONTAINER THEREOF**

(57)     The present invention relates to the field of the transportation and storage of goods and, in particular, to a box or box-like transport container formed of corrugated board or laminated board that can provide a high degree of thermal insulation. More particularly, the present invention relates to board for the use in such storage containers formed from such board that comprise a box or box-like container, being a hand-held container or a pallet shipper.

Figure 3

Figure 3a

EP 4 393 694 A1

(52) Cooperative Patent Classification (CPC): (Cont.)
B32B 2307/206; B32B 2307/30; B32B 2307/416;
B32B 2439/00; B32B 2439/40; B32B 2439/62;
B32B 2439/70; B32B 2439/80

**Description**

Field of Invention

The present invention relates to the field of the transportation and storage of goods and, in particular, to a box or box-like transport container formed of corrugated or laminated board and to a flexible corrugated or laminated sheet that can provide a high degree of thermal insulation. More particularly, the present invention relates to storage containers formed from such board that comprise a box or box-like container that can be hand-held, a pallet shipper or an insulating cover for such shippers and containers.

Background to the Invention

In the field of logistics, that is the field of movement and supply of produce and materials, there is a widespread requirement to protect a thermally sensitive load to ensure that certain types of produce and materials do not extend beyond certain temperature thresholds. It is well known that, for example, vegetables when subject to extremes of temperature, especially over extended periods of time, that they become flaccid, as the cell structure is broken down through the formation of icicles or through dehydration.

In essence, in any transport container with a thermally sensitive load, the rate at which heat passes through the packaging material of the transport container must not extend beyond a permitted temperature range for the product. Temperature control of thermally sensitive goods is particularly challenging when the thermally sensitive goods must be maintained within a narrow temperature range. Refrigeration units as used on certain trucks and containers require a source of electrical power or a fuel for a gas-powered air-conditioning / freezer unit and also require an atmosphere with which to exchange heat. Such refrigeration units not only occupy a volume, they cannot be used for small containers and individual boxes. Typical means for shipping temperature sensitive materials involves the use of an insulated box, with the necessary shipping and warning labels, along with some cooling agent. These cooling agents have typically been, for example, a frozen gel, dry ice, or water-based ice, placed within an insulator packing agent, such as cotton or, latterly, plastics materials such as expanded polystyrene foam, wherein heat is absorbed by such cooling agents.

Low-cost temperature control systems in the transport industry often rely upon a number of layers of plastics foam to retain an inside temperature subject to the thermal path to a transported product from an outside to the outside to maintain ideal operating temperature, as disclosed in WO02085749 in the name of the present applicant. WO02085749 teaches of a transport container which comprises of a substantially rigid liner, with flexible plastics foam surrounding the liner, and two substantially rigid plugs insertable at either end inside the liner to retain the liner in a non-collapsed configuration whereby to hold transportable contents therein. Multilayer insulation (MLI) is, accordingly, a common passive thermal control element used in transport. MLI seeks to prevent both heat losses to the environment and excessive heating from the environment. Low-cost temperature control in the transport industry relies upon MLI to retain an inside temperature subject to the thermal path to a transported product from an outside the outside to maintain ideal operating temperature. MLI can simply comprise layers of plastics foam. However, polyethylene foam is not rigid and necessitates an encasement or be otherwise supported by way of a secondary rigid element. Furthermore, there is an increasing emphasis on the use of products that can be readily recycled. However, recycling of plastics materials can present problems.

Whilst nearly all types of plastics can be recycled, the extent to which they are recycled depends upon technical, economic and logistic factors. As a valuable and finite resource, the optimum recovery route for most plastic items at the 'end-of-life' is to be recycled, preferably into a product that can then be recycled again and so on. Notwithstanding the above, certain plastics materials such as most polystyrene products are not recycled due to the lack of incentive to invest in the compactors and logistical systems required. Equally, polyethylene, without special treatment, is not readily biodegradable, and thus accumulates in landfill etc.. The quantity of post-consumer plastics recycled has increased in recent years, but rates lag far behind those of other items, such as newspaper (about 80%) and corrugated fibreboard (about 70%).

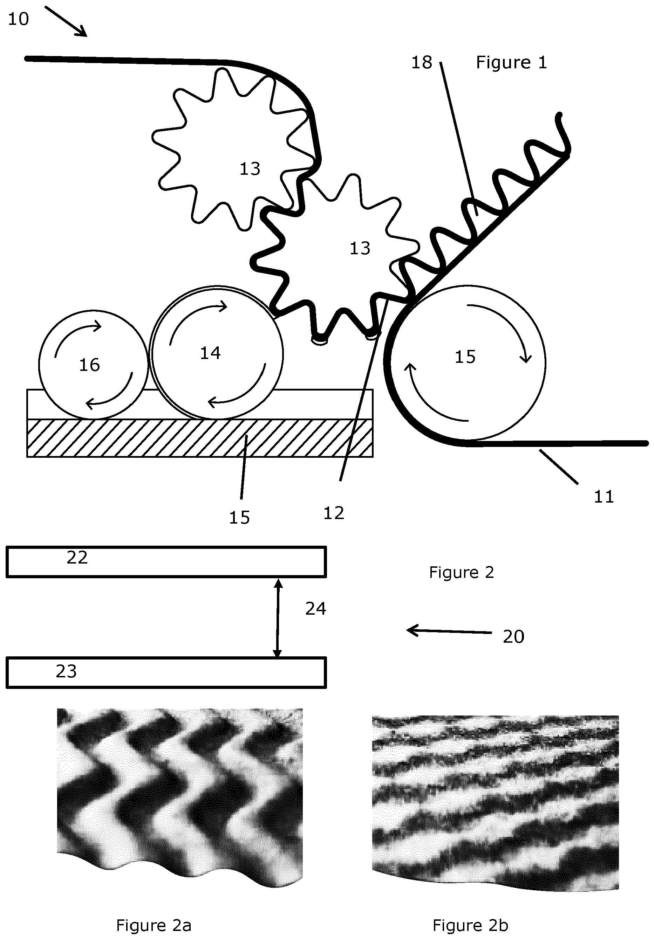

For parcel delivery systems, corrugated paper is typically employed. Whilst un-faced corrugated board is documented from Victorian England, when one of its initial uses was to provide stiffness and cushioning to men's tall hats, which had hitherto been stiffened by rolled sheets of flat paperboard, yet were fragile and subject to damage. Today, such material would be called "un-faced corrugated" or "un-faced corrugate". Notwithstanding this corrugated and paperboard packaging is typically - and erroneously - termed 'cardboard'. Single face corrugated sheet comprises a sheet of facing or liner material joined to corrugated medium, by the use of, typically - for wood-based sheet material - water based glue on the crests of flutes, the liner is brought into contact and can be heated to "set" the glue. Corrugated paper boxes are cheap to manufacture and have desirable qualities of recyclability and low thermal conductivity, but are typically moisture absorbent and are typically heavier than plastics corrugated equivalents. Corrugated plastics sheet can be extruded in a simple process to make plastic sheet analogues of corrugated paper. In the delivery of temperature sensitive goods plastics such as expanded polystyrene is typically employed. With reference to Figure 1, there is shown a system for producing single face corrugated sheet material 18 material where a facing sheet material 11 is brought towards a corrugate sheet material 12 formed by two meshing die rollers 13. The meshing roller that abuts the pressure roller 15 is coated with glue by being in contact with glue roller 14 - the glue is received from a trough 15, with the amount of glue being controlled by a metering roller 16.

Presently, in view of the perceived busy life being followed by many where no time is available to make food or go out to shop - contrasted with lockdown measures under pandemic conditions - there has been an increase in the prevalence of home delivery services with respect to groceries and "take-away" meals, which products are frequently temperature sensitive products, whether being the weekly shop or a home delivery pizza. Cold pizza or hot/warm refrigerated goods are unacceptable and therefore improvements in thermally insulating capabilities are continuously required. The boxes for such food deliveries are frequently made of polystyrene and suffer from being not easily recycled.

US4441948 (MacMilan Bloedel) teaches of a box and method of making the same wherein method and an apparatus for forming a multi-layered container of compressible sheet layers, such as corrugated board. The containers are formed in a single operation and avoids the known techniques of folding the layers before laminating in multistep methods, which give rise to discontinuities in a thermal path from an outside of a box so formed to an inside of the box. The method of forming a multi-layered container having a plurality of flat sides with corners between adjacent sides comprises winding compressible sheet layers on a forming mandrel. WO2005113230 (Michael Shäpers) teaches of a stiff sandwich element for use as building construction panels, wherein two outer layers sandwich a middle layer in the form of a supporting structure with periodically repeating double-curved shell-like sheet having opposing principal curvatures, the outer layers having trough-like depressions on an inside faces thereof which depressions engagingly locate with outwardly extending principle features of the middle layer and are designed in such a way that they adapt themselves to the form of the middle layer

Object of the Invention

The present invention seeks to provide a solution to the problems addressed above. The present invention seeks to provide a type of laminated board such as corrugated cardboard having an improved degree of thermal insulation / lower rate of thermal conduction. The present invention also seeks to provide a temperature-controlled transport/storage assembly for goods in cartons, palletised boxes or otherwise, whereby the thermal conductivity permits goods retained therein to be simply maintained within an atmosphere having a predefined temperature range. The present invention seeks to provide a type of flexible sheet utilizing laminated cellulose fibre-based product having an improved degree of thermal insulation / lower rate of thermal conduction. The present invention also seeks to provide a temperature-controlled transport/storage assembly that can be made from recycled materials and be further re-used or recycled in due course.

Statement of Invention

In accordance with a general aspect of the invention, there is provided a thermal control board suitable for the manufacture of an insulating transport/storage container for transporting/storing temperature sensitive materials.

In accordance with another general aspect of the invention, there is provided a thermally insulating transport/storage container for transporting/ storing temperature sensitive materials, formed from such board - whether comprising a container with flat or curved panels or made with such insulation materials and would or coiled about a former, whereby to make a tubular container.

Thus, in a first aspect, the present invention provides a thermally insulating laminated sheet comprising a first generally planar sheet of substrate; a second generally planar sheet of substrate, with an insulating sheet material therebetween, in accordance with claim 1. Conveniently, the insulating sheet material is a corrugated sheet material, such as corrugated or embossed paper or card, which is apertured. By cutting such apertures into the flute, it is understood that at least one of a removal of thermal bridges or an extension or elongations of existing thermal bridges is created and provides a benefit when used in association with a reflector backing.

Conveniently, where corrugated sheet material is employed, the corrugated sheet material comprises single-sided corrugated material. This has the benefit of enabling the material to be easily shaped or formed about an axis parallel to a fluting direction, whereby to enable simple configuration of the board with respect to curved surfaces. Conveniently, the corrugated sheet material is apertured only with respect to its corrugated insert. This has the benefit of providing a degree of rigidity from the backing sheet, especially when secured in place with further layers of insulation sheet material, where mass rigidity arising from multiple layers of insulation. It will be appreciated that embossed paper can be utilised in a similar fashion to double- or single-sided corrugated material. Cellulose pulp alternatives such as air-laid paper can also be employed as an alternative. This material may be more economically sourced and also benefits from being placed upon a carrier board.

The present invention can be provided as a paper-board design which is as light as - or even less heavy than - plastic based material with same or better insulation. In the manufacture of such board, the paper can be conveniently apertured by roller-die systems and then applied to at least a first support surface, which together with any further insulation members are and second sheets of board, conveniently being paperboard. In another convenient alternative, the insulating sheet material is a low-density insulating foam material sheet, such as polyurethane foam sheet; the apertures can be defined by the use of a roller-die or similar or by way of original manufacture. A foam plastics material may have a greater rigidity, whereby a backing or liner sheet may not be necessary, albeit a backing sheet can conveniently be provided, preferably supporting a reflective layer of evaporated or sputter coated aluminium - although other techniques of providing thin film (e. g. 10 nm) are known, as indeed are other metals suitable for this purpose. It is also notable that, especially with B-flute corrugate, the presence of backing sheets also effectively prevents the generation of convection currents which can be significant. The foam may be moulded so as to provide a simple form of geodetic construction to minimize the amount of material used, and also benefits from being placed upon a carrier board, preferably provided with a reflective coating.

Preferably, the insulating sheet material is placed between a reflective coating provided on the layers that sandwich the insulation material, conveniently on an inside face thereof. By the use of such reflective (low emissivity) surfaces, it is possible to simply calculate the equivalent conductivity with an air cavity. The insulating material can then be considered as a uniform layer sandwiched between two reflector layers. Alternatively, or additionally, the insulation sheets, especially, for example the backing sheet of an apertured corrugate board can be provided with a reflective coating. The equivalent conductivity of the whole design can therefore be reduced and estimated. Surprising benefits have been realized in the utilization of more than one reflective coating, with best results being provided when all sheets are provided with a reflective layer, noting that in accordance with preferred embodiments of the invention, the overall density increases.

Furthermore, it will be appreciated that whilst a simple embodiment of the invention can comprise first and second outer layers, with a single apertured insulating material sandwiched thereby, further layers of aperture insulation material can also be provided, with benefits realized with respect to structural integrity as is known from standard multilayer corrugated cardboards. On the one hand, by having paper/cellulose fibre sandwich sheet which is apertured, and careful attachment to the inside faces of the outer layers of sheet, a degree of inherent flexibility can be provided. Notwithstanding this, by having multiple layers of apertured sheet material closely retained with respect to each other or by having a greater use of adhesive and or defining the strips such that they are provided with less resilience, then the sheet becomes stiffer whilst offering excellent thermal insulation properties. Conveniently, glues such as starch-based glues are employed, being easily recycled. In the limit, the invention, when provided as an insert between, for example, an outside box provided with an interior insert, moulding or otherwise can comprise a single layer of insulation between first and second outer layers; when enclosed within, for example, a plastics bag or a paper-based bag, a particularly simple design can be particularly effective.

In further aspects of the present invention there are provided methods of manufacturing laminated board comprising the provision of a first generally planar sheet of substrate; a second generally planar sheet of substrate, with an insulating sheet material therebetween, which insulating material is apertured in accordance with claim 14. The insulating sheet may comprise several sheets, conveniently with the apertures of adjacent sheets offset, each sheet one with respect to its immediate adjacent sheet(s). This provides an increase in the path length as provided by an insulting support between first and second outermost sheets, which will maintain a separation between the sheets. In multiple layered panels, it may be considered appropriate to have a continuous sheet i. e. a non-apertured sheet to provide a lateral strengthening element (to make a more rigid board) yet also provide a degree of mechanical resilience / if an outer-sheet is damaged, then the effective thermal insulation is reduced - but not removed, providing a useful safety factor, to overcome possible hesitancy in an adoption of products incorporating the panels. Preferably, the insulating sheet material is placed between a reflective coating provided on the layers that sandwich the insulation material, conveniently on an inside face thereof. The present invention also comprises a method of manufacture of board formed from apertured corrugated or embossed paper or card. The layers can be secured by being placed within an envelope. The layers can be secured by being fastened by an adhesive. The layers can be laterally secured within an enclosure. The layers of panels are secured by compression channels about their peripheral edges.

Recyclable materials could be used as insulation however the density is significantly higher than plastic based solutions. The key to this problem seems to be the conversion of these raw materials that have already been tested. Indeed, these insulations are continuous and delivered on a roll. Even if a product has a low thermal conductivity, air has a lower thermal conductivity; although other gases could be used. Accordingly, the removal of material provides a simple method of reducing density and, concomitantly, the weight of a finished product, whilst also improving a thermal insulation performance. It is to be noted that plastics bags that can biodegrade are becoming increasingly widely available, without significant cost issues, whereby plastics sheeting can be used in a packaging solution, without the problems of subsequent difficulties of product being unrecyclable.

The use of corrugated or embossed sheet can provide considerable innate mechanical rigidity dispensing with the need of a further strengthening element and, furthermore - importantly for a transport container - can absorb significant degrees of mishandling. Alternatively, one can reduce the amount of support, reducing the number of support thermal paths from the first and second outermost sheets. As is widely appreciated, corrugated sheet can be formed of cellulose wherein layers of sheet and fluted corrugations are glued or otherwise connected to each other - noting that glue need not be applied to each and every crest of the corrugate fluting whereby the product is amenable being configured to adapt to non-rectiplanar shapes. Equally, the corrugated sheet can be formed of a thermo-plastics material, such as polypropylene, which is manufactured in an extruded form, with the apertures formed by subsequent stamping by die-cutting action, for example.

The present invention can provide a simple board material to manufacture, low-cost boxes for e-grocery businesses and e-take-away operators. Data tracking systems could be employed to provide advice of delivery and with regard to security; temperature sensors could be provided to indicate an inside temperature of the contents, to dissuade early opening of a grocery box.

The manufacture of a box, carton or container using panels in accordance with the present invention can be as simple as cutting a roll of laminated sheet material to a specific width and using such width of material in surrounding a former - which may be of numerous shapes; rectangular (including square, triangular and other polygons), realizing that the closure element in the form of a bung - which can be made from numerous materials in principle and needs to be of a corresponding dimension so as to provide a friction fit and have a similar conductivity value - can easily and simply be made of the same material as the walls of the container.

Notwithstanding the problems encountered by known systems which employ phase change materials for short-term use, it will be realised the present invention will also benefit in terms of duration of temperature control, the use of phase change material temperature control packs that include one or more phase change materials. Such phase change materials are typically contained in sealed containers which can be provided to further increase a period of time within which temperature stability can be achieved. The sealed containers for phase change materials can be provided by one of, for example, a plastics bag, a blister pack, a sheet cellulose package, or a sealed polymer enclosure. The temperature control packs can be configured to provide a defined thermally stable atmosphere within the payload volume for a number of days as is typical for international travel, for example.

In accordance with a further aspect of the invention, there is provided a laminated board wherein the insulating sheet material comprises two sets of strips of a corrugated sheet material; wherein the first and second layers of corrugated sheet material are fixedly associated with first and second cardboard/paperboard sheet material; wherein the strips are uniformly arranged at a diagonal to the corrugate flute direction and the strips being arranged at a corresponding diagonal to an axis of the first and second cardboard/paperboard sheet material; whereby, the first and second cardboard/paperboard sheet materials have corrugate materials with flutings which mesh with respect to each other and upon securement by adhesive or otherwise provide a rigid board with good insulation properties. It will also be appreciated by the skilled man that the corrugated material can be replaced by embossed material. This can provide simpler to produce alternatives, since an innate strength of product is not determined with regards to an alignment of the corrugated material.

The present invention thus benefits from the use of a sheet material such as plastics foam or corrugated board where apertures defined in the material provide thermal conduction discontinuities, which benefit from being placed between low emissivity surfaces. The product can, when made into board can be used in the manufacture of cartons and containers for the distribution and storage of thermally labile products. Importantly, it can be viewed as a substantial benefit, in a cellulose embodiment, that the product is readily identifiable as a "green product", being made from natural resources and is readily decomposable. Notwithstanding this, when phase change materials are provided, the period of time in which temperature is maintained within a particular range can be substantially increased.

Brief Description of the Figures

For a better understanding of the present invention, reference will now be made, by way of example only, to the Figures as shown in the accompanying drawing sheets, wherein:

Figure 1 illustrates a section through a corrugation process to produce a single-sided corrugated sheet / the first process in the manufacture of double-faced corrugated sheet;
Figure 2 illustrates a conceptual aspect of the invention;
Table 1 illustrates variations in conductivity at different temperatures;
Figure 2i shows a graph depicting conductivity versus gap size of an example in accordance with the invention;

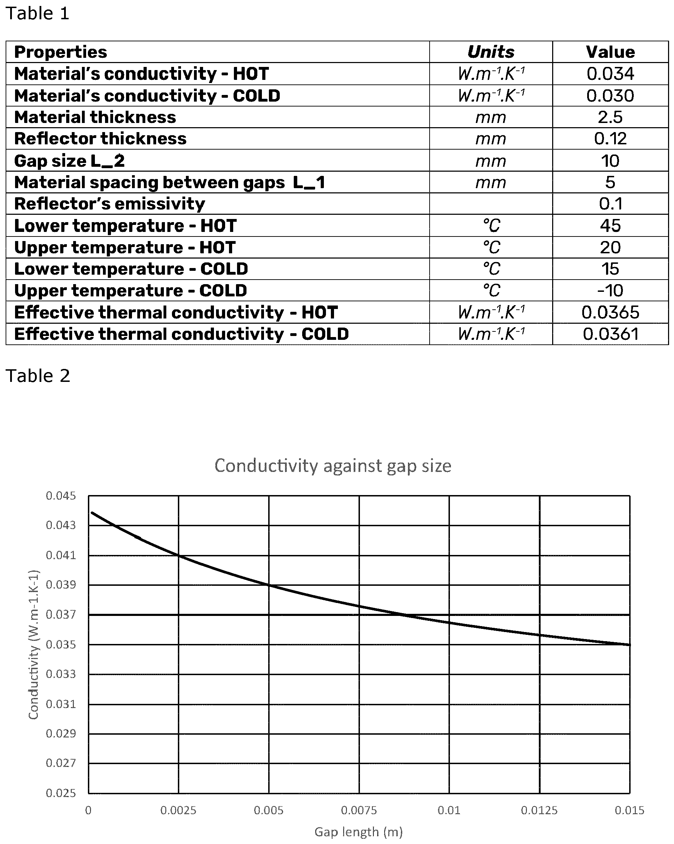

Figures 2a, 2b illustrate two alternative embossed cellulose sheet materials;

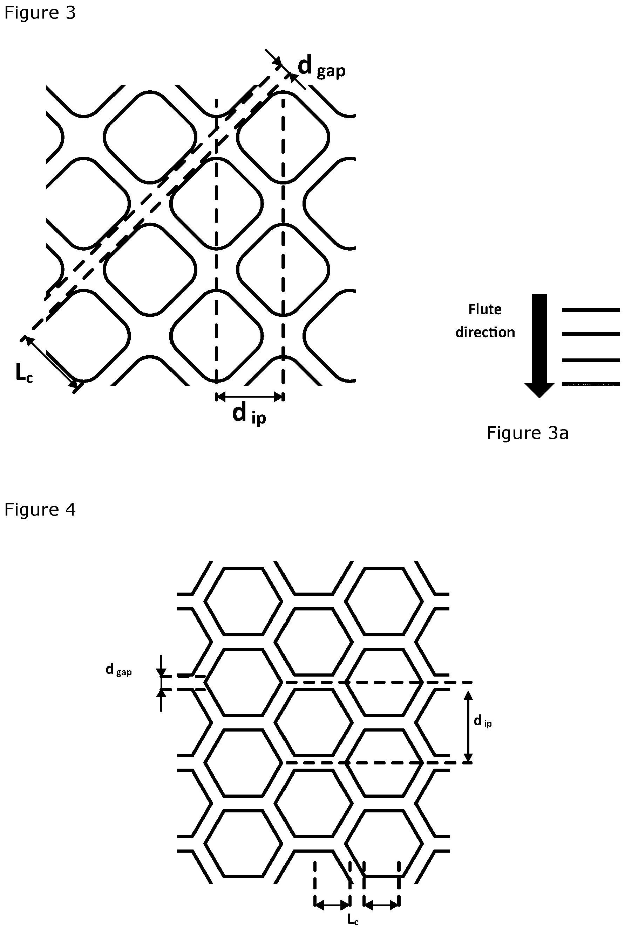

Figure 3 shows a first design of insulating sheet spacer having square apertures, with rounded corners, with the squares being arranged diagonally with;
Figure 4 shows a second design of insulating sheet spacer having hexagonal apertures;

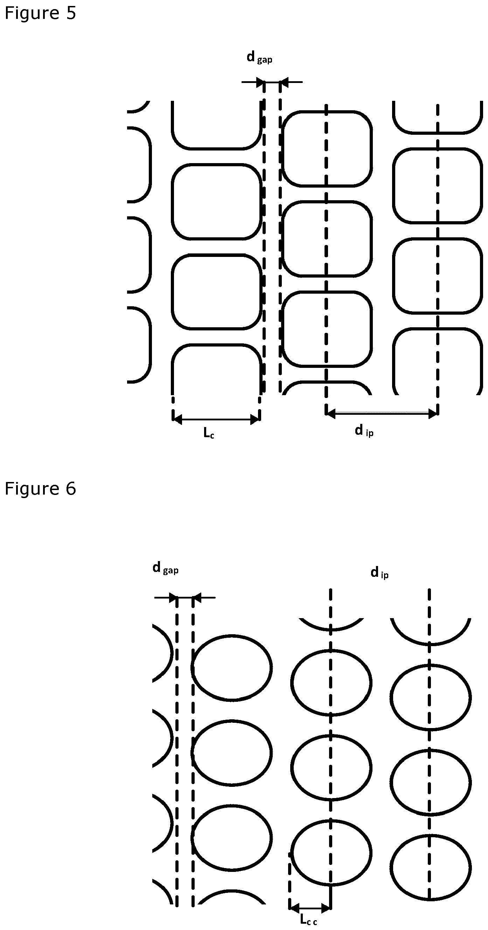

Figure 5 shows a third design of insulating sheet spacer having square apertures;
Figure 6 show a further design of insulating sheet spacer having round apertures as used in fourth and fifth embodiments of the invention;

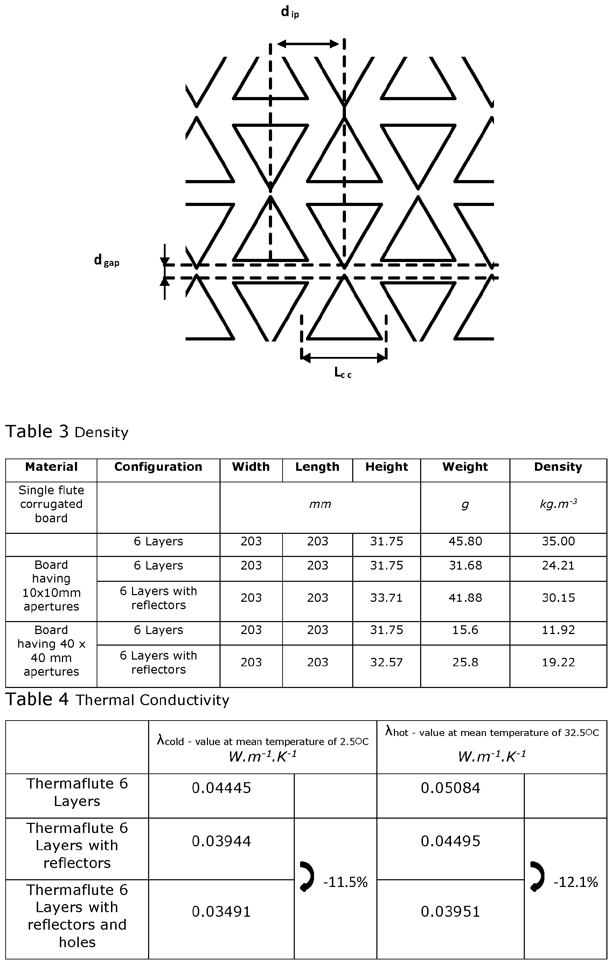

Figure 7 shows a further embodiment wherein the apertures are triangular
Table 2 shows a comparison of density of types of corrugated board;
Table 3 shows a comparison of thermal conductivity of types of corrugated board;

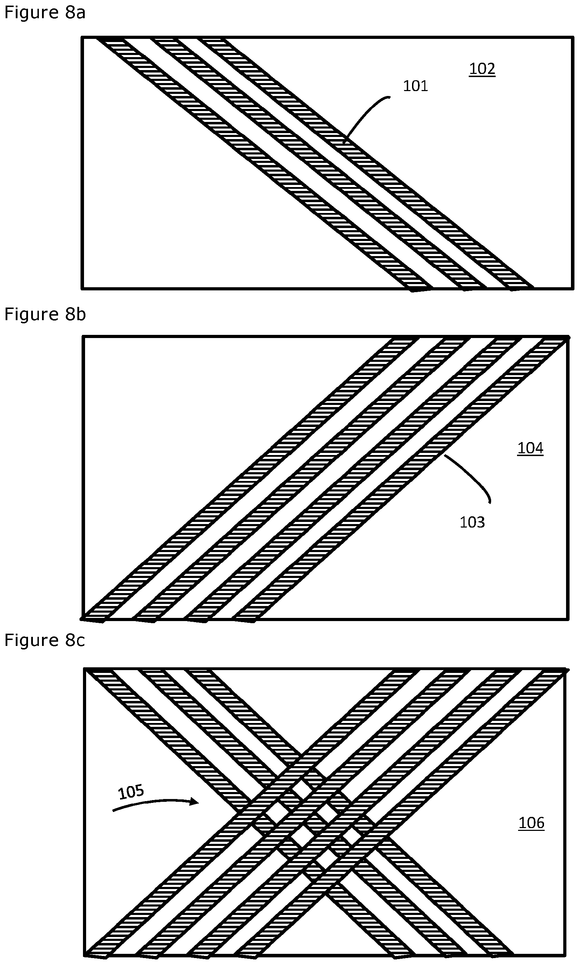

Figures 8a - 8c show the steps in laying down linear strips of corrugated material insulators;

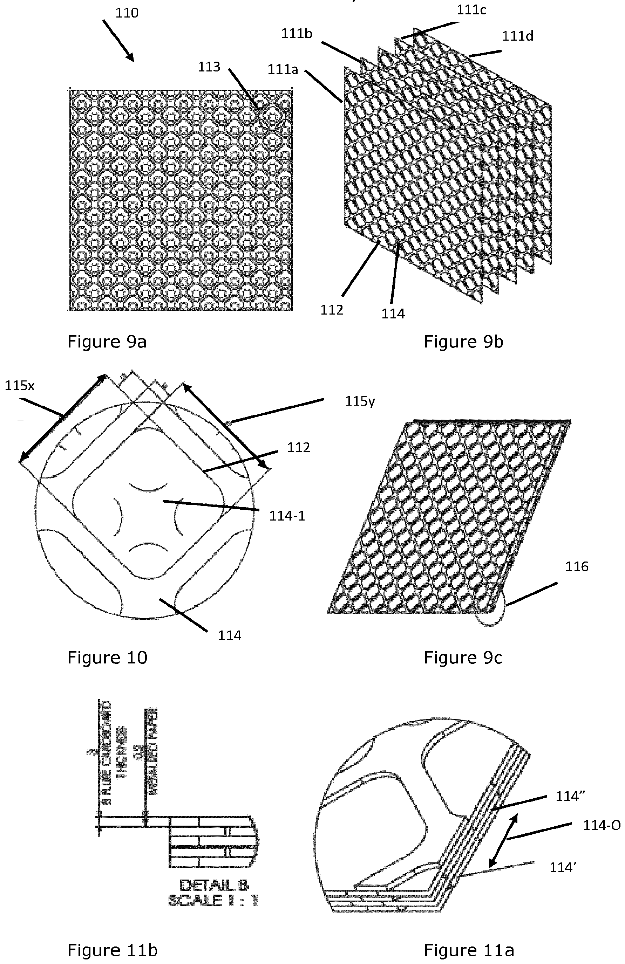

Figures 9a - 9c show plan, perspective spaced and perspective views of an exemplary four-layer insulation sample;
Figure 10 is a detail view of an aperture show in Figure 9a;
Figures 11a, 11b are, respectively, expanded perspective and cross-sectional views of the example panel shown in Figure 9c; and

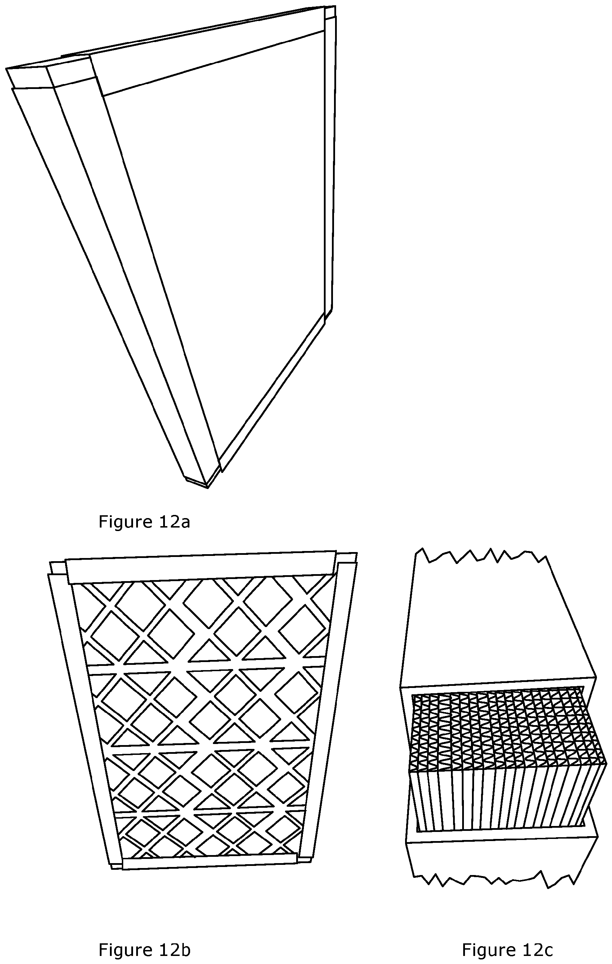

Figures 12a - 12c show, respectively, perspective, plan and edge views of a panel made in accordance with the invention.

Detailed description of the Preferred Embodiments

There will now be described, by way of example only, the best mode contemplated by the inventor for carrying out the present invention. In the following description, numerous specific details are set out in order to provide a complete understanding to the present invention. It will be apparent to those skilled in the art, that the present invention may be put into practice with variations of the specific.

It is widely appreciated that laminated board material such as corrugated cardboard in the form of double-sided board (and multiple-sided board) can be extremely stiff in the plane of each sheet. Corrugated board is available in many different material grades with varying paper weights and finishes. Fluting is typically produced using waste fibre and is known as waste-based fluting or can be made using semi-chemical fluting (80% hardwood, 20% softwood) Standard finishes include Kraft (brown), white and mottled, LT (recycled paper) and Test (recycled inner liner). White papers can be coated to provide superior substrate for greater print quality. Standard paper thicknesses start at 125 gsm (grams per square metre) and increase to 150 gsm, 200 gsm and 300 gsm. Different flute weights are also available and depend on the strength of material required. Typical paper weights used for fluting are as follows: 90 gsm; 105 gsm (Most Common Flute Standard); 112 gsm; 150 gsm and 175 gsm. Additionally, there are also a number of commonly used flute profiles or sizes, which are as follows: "A flute" - 5 mm; "B flute" - 3 mm; "C flute" - 4 mm; "E flute" - 1. 5 mm; "F flute" - 1.2 mm. The flute material is usually manufactured from a waste paper i.e., fully recycled material; or what is known as semi-chem fluting (SC). B flute is the most commonly used cardboard used for packaging applications, with approximately 150 flutes per metre. It is also pertinent to point out that with fibres being natural material, the weight will be dependent upon the base cellulose fibre and the degree of any retained water. Whilst it is intended to use commercially available, "off-the-shelf", grade of material, given that metal coatings will be applied, the physical characteristics will vary, enabling for example different thicknesses of board to be employed, noting concomitant cost issues.

The thermal characteristics of cardboard, namely its thermal insulation performance properties will vary with regard to the above referenced differences in grade, material of construction etc. Typically, a measurement of the equivalent conductivity with respect to an air cavity is made as a convenient reference. In practice, the determination of transmission values can be easily performed comparison with similar, known materials, by considering the insulating board material as a uniform layer sandwiched between two reflector layers. The equivalent conductivity of the whole design can therefore be simply estimated, as is known in the art, per Prof. C Saint-Blanquet of the University of Nantes.

Applicant Company, in an aim to reduce thermal transmission losses associated with a laminated packaging material has conducted numerous experiments with cardboard and similar materials. In the performance of these experiments, measurements have been performed by considering the material being a layer of insulation between two reflective layers (low emissivity surfaces), whereby to calculate the equivalent conductivity relative to an air cavity. The insulating material is considered as a uniform layer sandwiched between two surfaces, which have also been found to perform when the inside surfaces of the two outer layers are provided with a reflective coating. For simplicity, it has been found that the thermal conductivity decreases when the gap between the two outer layers increases - i. e. the thickness of the insulating material increases. In order to confirm these theoretical values, prototypes were made with defined geometries that have been choose arbitrarily.

Applicant Company, with a desire to reduce thermal transmission losses associated with specific multilayer boards, comprising single-faced corrugated cardboard that has been coiled as is known from GB2585317 in the name of Applicant Company. With reference to Figure 2, a prototype board sample 20, in accordance with the invention, was made with first and second outer boards, 22, 23 having a number of square apertures (not shown in this side view) in the corrugated material 24, spacing the two board materials was made with 10 x 10 mm apertures spaced from each other by 5 mm whereby a weight reduction of 64% was realized for the insulation layer. These specific dimensions were selected so that thermal convection phenomena associated with the specific board design could be ignored in associated theoretical modelling, although this was later proven to be unnecessary. In practice, however, the board needs to dimensioned so as to fit within a framework suitable for the cold chain product, whether coiled - when axial end caps need to be configured or made as a rectangular box with six (or more) panels arranged to fit together, with care being taken to ensure that the edge members are fastened and sealed to prevent unwanted heat transfer issues to occur and this can be performed in a number of fashions as known to those skilled in the art. With reference to Figures 2a and 2b, the thermal characteristics of an exemplary uniform material with a thermal conductivity of 0.034 $W.m^{-1}.K^{-1}$, layered between two the reflective layers boards 22, 23 with an emissivity of 0.1, would drop to 0.029 $W.m^{-1}.K^{-1}$ with the opening described above resulting in a performance gain of 15%. Applicants have determined that measurements performed on single fluted corrugated cardboard showed encouraging results proving the design concept and the analytical solution. This material has been chosen due to its low price and widespread availability. The material conductivity went from 0.044 $W.m^{-1}.K^{-1}$ to 0.038 $W.m^{-1}.K^{-1}$. It will be appreciated that other three-dimensional sheet materials such as embossed paper or card can be employed; Figures 2a and 2b show exemplary sheets of embossed cellulose sheets. As the skilled man will appreciate, embossed cellulose shares similar strength and spacing attributes with corrugated cellulose materials; if bespoke embossing is provided, then the embossing could be arranged so that even when one sheet is pressed against another, the two embossed sheets do not have a thickness less than the sum of their separate thicknesses, noting that two oppositely directed corrugated boards will mesh one with respect to another whereby the sum thickness in mesh mode is considerably less than the sum of their separate thicknesses. This has the result that an embossed board can be reflective yet not need a backing support, although there would then be a change to the convection characteristics; for example, every other embossed board could be apertured to counter this.

For clarity, the designs shown per images of Figures 3 - 7 have been ranked with the most desirable design first as of the date of filing and for a particular desired outcome. However, this hierarchy is subject to requirements depending on various constraints such as, but not limited to: feasibility, cost, and final structure's strength. All dimensions are set for their nominal values to increase thermal insulation's performance. These values are ideal and should be adapted depending on manufacturing capability and mechanical properties. The aperture - sheet material density ratio for a sample is the ratio of the area of the support material between the first and second outer surfaces to the corresponding area of said first outer surface (or second outer surface, since they are equal). It could also be expressed as a percentage indicating how much surface area the frame cover. Hence, the apertured sheet surface covering is $1 - \rho$. To achieve the highest thermal insulation, the aperture - sheet material density ratio $\rho$ should be minimized reducing the thermal bridges. The material used as an insulator for the theoretical thermal conductivity value was single faced corrugated cardboard.

Figure 3 shows a first design of insulating sheet spacer having square apertures, with rounded corners, with the squares being arranged diagonally with respect to a flute direction as indicated with reference to Figure 3a, with the sides being defined therein where apertures within the inside start winding portion side edge 31 of the single sided corrugated winding 11. In a coiled product, the flutes of the corrugated material conveniently face inwardly, with a liner being employed when a box has been assembled. Notwithstanding this, it may be more conveniently to have the flutes directed outwardly

| | |
|---|---|
| Characteristic length: | $L_c = 40\ mm$ |
| Gap between adjacent apertures: | $d_{gap} = 7\ mm$ |
| Distance between aperture centres: | $d_{ip} = 47\ mm$ |
| Aperture - sheet material density ratio: | |

$$\rho = \frac{d_{ip}^2 - L_c^2}{d_{ip}^2} \qquad p=0.276$$

| | |
|---|---|
| Theoretical conductivity value: | $\lambda_{hot} = 0.033\ W.m^{-1}.K^{-1}$ |

Figure 4 shows a second design of insulating sheet spacer having 20 mm radius hexagons (20 mm side length) separated from each other by a 7 mm gap. Each row was arranged so the diameter d parallel to the flute direction would fall midway with respect to a gap between two hexagons in adjacent rows, with the distance between two hexagon centres from the same row being 41.6 mm.

| | |
|---|---|
| Characteristic length: | $L_c = 20\ mm$ |
| Gap between adjacent apertures: | $d_{gap} = 7mm$ |
| Distance between aperture centres: | $d_{ip} = 47\ mm$ |
| Aperture - sheet material density ratio: | |

$$\rho = \frac{\left(Lc + \frac{d_{gap}}{2 \times sin\ \pi/3}\right)^2 - L_c^2}{\left(Lc + \frac{d_{gap}}{2 \times sin\ \pi/3}\right)^2} \qquad p=0.308$$

Figure 5 shows a third design of insulating sheet spacer having square apertures of 40 mm, 3 mm radius rounded corners, having first and third parallel sides parallel to the flute direction and the other second and fourth sides being perpendicular to the flute direction.

Characteristic length: $L_c = 40\ mm$

Gap between adjacent apertures: $d_{gap} = 7\ mm$- parallel to flute

Gap between adjacent apertures: $d_{gap} = 157\ mm$- perpendicular to flute

Distance between aperture centres: $d_{ip} = 47\ mm$

Aperture - sheet material density:

$$\rho = \frac{(L_c + d_{gap}) \times (L_c + d_{gap}) - L_c^2}{(L_c + d_{gap}) \times (L_c + d_{gap})} \quad \rho = 0.381$$

Figure 6 relates to fourth and fifth designs of insulating sheet spacer each having circular apertures of 20 mm diameter, with a separation of 7 mm. However, the alignment of the circles was arranged such that each row was shifted respectively by 47 and 117 mm respectively.

Fourth Design:

Characteristic length: $L_c = 20\ mm\ radius$

Gap between adjacent apertures: $d_{gap} = 7\ mm$

Distance between pattern centres: $d_{ip} = 47\ mm$

Aperture - sheet material density:

$$\rho = \frac{d_{ip}^2 - \pi Lc^2}{d_{ip}^2} \quad p = 0.431$$

Fifth Design:

½ shift between circles - per fifth design

Characteristic length: $L_c = 115\ mm$      diameter

Gap between shape $d_{gap} = 20\ mm$

Distance between pattern center $d_{ip} = 117\ mm$

$d_{ip} = 135\ mm$

Void-matter density ratio:

$$\rho = \frac{d_{ip}^2 - \pi Lc^2}{d_{ip}^2} \quad p = 0.342$$

Figure 7 relates to a sixth design of insulating sheet spacer comprising equilateral triangles with one side parallel to the flute and the others by 60° to the flute, the base length being 40mm and the spacing between triangles being spaced by a 7mm gap between their respective sides.

Characteristic length: $L_c = 40\ mm$

Gap between adjacent apertures: $d_{gap} = 7\ mm$ perpendicular to flute

Distance between pattern centres: $d_{ip} = 28.08\ mm$

Aperture sheet

$$\rho = \frac{(\frac{L_c}{2} + \frac{2\sqrt{3}}{3} \times d_{gap}) \times (\frac{L_c}{2} + \frac{2\sqrt{3}}{3} \times d_{gap}) - \frac{\sqrt{3}L_c^2}{4}}{}$$

material density ratio: $$\left(\frac{L_c}{2} + \frac{2\sqrt{3}}{3} \times d_{gap}\right) \times \left(\frac{L_c}{2} + \frac{2\sqrt{3}}{3} \times d_{gap}\right) \qquad p = 0.985$$

Tables 2 and 3 comprise tables relating, respectively, to density and thermal conductivity of a number of exemplary models, provided with six layers of insulating material. From a brief review the skilled man can readily determine that the density of a corrugated board with apertures yet supporting a reflective surface is lower with respect to a non-apertured corrugated board without any reflective coating.

Figures 8a - 8c relate to a further embodiment; rather than cutting apertures in corrugated paper or embossed cellulose sheet, strips of corrugated paper 101 are provided, where the strips are cut at 45° to the flute direction and are mounted with respect to cardboard / paperboard 102, with the strips 101 of corrugated paper each arranged at sheets at 45° to an axis of the cardboard / paperboard. It is to be noted that Figure 8b is viewed from rear and for the purposes of explanation, the cardboard / paperboard 104 is translucent - i. e. the cardboard / paperboard of 8a and 8b is the same (only three and four strips of corrugated paper 101, 103 are shown for clarity), with the corrugated strips lying in the same direction - which makes manufacture relatively simple in that there is no interference arising from two types of board with strips running diagonally with respect to each other. With reference to Figure 8c, it can be seen that when presented together, the corrugated paper strips of the respective first and second boards mesh, as indicated by reference numeral 105, mutually adding to the strength of the resultant board 106, whilst still maintaining very good insulation qualities.

Figure 9a show a composite insulation member 110 suitable for positioning between first and second cover sheets (not shown), with four insulation sheets as indicated in Figure 9b, which shows the separate insulation sheets 111a - 111d in a spaced apart configuration. Referring to Figures 9a, 9b & 10, Figure 10 is an expanded view of circled section 113 indicated in Figure 9a. Each sheet comprises a number of generally rectangular apertures with rounded edges as indicated by reference numeral 112; reference numeral 114 indicates a central portion surrounded by four apertures, the dimensions of the rectangle are indicated as 115x and 115y, noting that they are equal for substantially square apertures. Reference numeral 114-1 indicates the central region of a second insulation sheet 111b. The offset is determined to increase the distance of the thermal path length from an inside face of a first cover sheet to an inside face of a second cover sheet, the greater the thermal path, the greater the insulation is provided, noting that the apertures also considerably reduce the conductivity of the insulation sheet member, noting that the thermal conductivity of air will be less than, such insulator, being cellulose fibre such as wood fibre, plastics insulator, air laid tissue and the like.

Figure 9c shows the panel in perspective view with a circled feature 116, being a corner section. Figure 11a shows an expanded view of circled feature 116. Features 114' and 114" in respect of this drawing exemplifies the offset 114-O between successive layers of insulation material 111a - 111d. It will be appreciated that variations in this offset distance 114-O can be utilised to minimise thermal transmission, dependent upon the number of layers of insulation material the thermal. With reference to Figure 11b, a section through a sample board shows each layer comprising a single face "b"-flute single faced corrugate BFC paper - corresponding to 3 mm in height glued to a metallized board layer MP having a thickness typically being 0.04 mm, but such paper can be typically in the range of 0.1 - 0.01 mm, as discussed above. The skilled man will realize that different flute thicknesses can be employed, together with differences in standard thicknesses, but it will be appreciated that in one aspect, the invention seeks to use the least material possible, to reduce, inter alia, the heat capacity of the insulation panel.

Figures 12a show a perspective view of an exemplary insulation panel 120 made in accordance with the invention comprising 25-layers of insulation of B-flute corrugate board - giving rise to a 75 mm panel thickness. The edges 121 are secured for this example with compressed fibre board /paper board shaped as a U-section member. This insulation does not include any cover boards for protection. The aperture pattern is shown in Figure 12b; Figure 12c shows a corner section. It will be appreciated that the apertured sections are not present about the edge in the sample section.

The example insulation board shown with reference to Figure 12 comprises a cardboard-based panel, where, for example a backing sheet of paper or cardboard is provided, conveniently also being provided with a low emissivity coating such as a thin film of metal. Thermal evaporation is a popular physical vapor deposition technique because of its simplicity: a metal in a high-vacuum environment is heated to its evaporation point by joule heating, for example by being placed in a resistive boat into which the metal is placed. Vaporized molecules then travel from the resistive boat or other source to the substrate where they nucleate together, forming a thin film coating. Whilst it is appreciated that a wide variety of materials can be deposited using this technique such as aluminium, silver, nickel, chrome, magnesium, among many others, aluminium is the preferred material because of its availability and cost and can be deposited in amounts which do not significantly add to the weight of a substrate, conveniently being paper or card, noting that the coating will affect the stiffness to an extent. In tests it has been found that a thickness of 5 nm has been found to give good results, but equally good results can be provided by coatings of 3 - 10 nm in thickness.

The cardboard fluting could be replaced by other sheet materials such as embossed paper or card is not the only way to described above is not so limited; Polyisocyanurate, also referred to as PIR, polyiso, or ISO, is a thermoset plastic typically produced as a foam and used as rigid thermal insulation, which limits applications where curved board is required, but the benefit of rigidity can assist in the production of packaging where a greater degree of stiffness is preferred. Closed-cell nitrile rubber foam could also be employed where flexibility is desired, as well as EPS, which is widely employed in thermal insulating installations. Notwithstanding the use of plastics in packaging, international regulations increasingly require insulation materials to be recyclable. Accordingly, development of the present invention has been substantially based on the use of natural cellulose sources such as wood (including bamboo).

Applicant Company has determined that the backing sheet of the presently favoured B-flute material is preferably provided. In one aspect of the invention, the first and second cover elements are provided with reflective surfaces - conveniently on the inside faces thereof for durability, one or more of the insulating sheets of the central insulation composite can also be provided with the reflective coating. Whilst this can be considered as being contrary to an ability to be recycled, since the metallization techniques of vacuum deposition actually deposit very small amounts aluminium, in the region of 0.05 gsm, it is generally held that the aluminium coating is so thin that it doesn't impede the recycling process when, for example, following the INGEDA froth flotation process, being a technique widely employed in the waste paper recycling industry to, inter alia, remove inks and other contaminants by selectively separating of hydrophobic materials from hydrophilic. Accordingly, this makes it a more ecological preferred option compared with other materials that give similar reflective abilities - like foils or plastic films - that can't be recycled conveniently or economically.

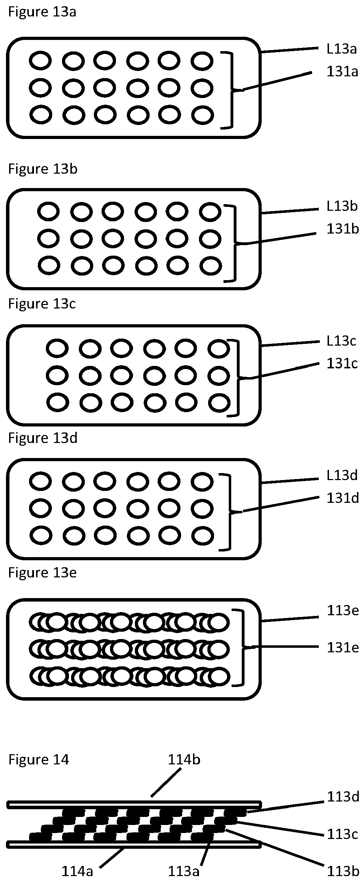

In a preferred embodiment, where there are several layers of insulating material, and referring to Figure 13a, there is shown a four-layer example of a multi-layered insulation system, comprising layer L13a - L13d, wherein there are three layers, layer L13d being the same as layer L13a, with layers L13b and layer L13c having their apertures 131 being spaced in a horizontal direction by similar amounts to layers L13a and L13b, respectively. Figure 13e show these layers, once superimposed upon each other as will typically be arranged within an insulation panel in accordance with the present invention. Figure 14 shows how these layers appear from a cross-sectional point of view, where an offset, between successive layers is easily determined, noting that this is shown from a point of view to simply indicate that the thermal distance from an initial lower face to a subsequent upper face for the transfer of heat from a first outer planar face of insulating material to second outer planar face is greater than the actual, normal (right angle to planar surfaces) distance. It will be appreciated that only a small number of apertures 113a - d are indicated in this figure, for simplicity, as opposed to likely number of, the apertures - with reference to the tables 2 and 3 where density and thermal conductivity indicate the benefits of having a greater aperture in a corrugate/foam/ air-laid substrate with board; moreover it is to be understood, the benefits of the present invention increase with greater numbers of insulation layers, for example with 6 - 40 layers, noting that the example of Figure 12 has twenty-five insulation layers. This is because it is intended to simply indicate the change in thermal path length. It will be appreciated that such transverse adjustments in spacing are optional but can act with other characteristics to improve the thermal characteristics of the insulation layers.

Figure 14 shows a four-layer arrangement of layers, in cross-sectional view, corresponding to, for example, Figures 13 a - d. In addition to the first and second outer layers 114a, 114b typically of a thin, low thermal conductivity plastics material, yet sufficiently rigid and durable, to maintain integrity, such as polypropylene of 1 - 3mm, the edges of the panel will need to be sealed to a degree. In the example of Figure 12, the edges have been sealed with a "u" channel section; in the alternative other types of maintaining integrity of the panel can be envisaged. For example, a water-soluble starch based foam could be used to maintain the layers in position. In another alternative, especially where the insulation panel is to be employed in a secure position and would be, for example, be protected by external and interior walls of a container, the first and second outer panels could comprise of the same type of panel as the insulating layers, ideally with a backing panel of the outer two panels facing outwardly. Such panels could be sheathed in a vacuum arrangement with the use of a plastics sheath or bag, or paper-based vacuum bag, with the vacuum enabling the layers to be held together, without starch glue or with a minimal amount thereof.

Applicant Company has employed natural adhesives such as starch-based glues to attach the apertured sheets. Starch is a natural polymer and is widely available, generally at relatively low and stable prices. It consists of glucose units chemically bound together so as to form a non-reducing polyhydroxy-material. By reason of the many hydroxyl groups, starch has a high affinity for polar substances such as water or cellulose. Starch can be reduced to low molecular weight sugars by enzymes called amylases, or by acid hydrolysis. Notwithstanding this, other glues or forms of retaining the panels and insulation layers in place may be more appropriate.

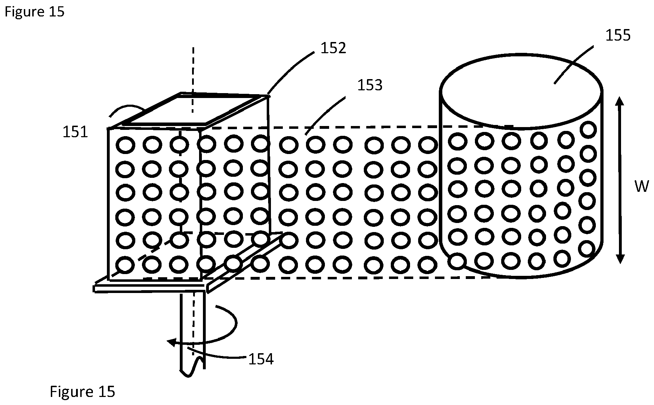

In a further embodiment, the present invention permits an alternate, equally simple method of fabrication of a tubular low thermal conductivity container, with reference to Figure 15. In this method, a first inside surface board is provided over a mandrel former 151, then, for example a layer of continuous insulation sheet element 153 is attached to the first inside board 152 by starch adhesive or equivalent, whereby once the adhesive is set, then the insulation layer 153 can be wound or coiled about the inside board mounted on the former 151, rotating about an axial support 154. The insulation sheet of width W is fed from a bobbin 155. This system of application can readily for a tubular element; it will be appreciated that this will enable winding of several layers easily, but tension of the sheet, together with relative rotations of the mandrel and bobbin; as the mandrel rotates, the diameter increases and therefore needs to reduce its rate of rotation relative to the bobbin 155. A benefit of this method of application is that the apertures will overlap to a degree, as opposed to being in direct alignment, whereby the thermal path length increases, due to the wound mandrel increasing in diameter. Once the number of desired layers of insulation have bene wound, the edges are secured using suitable starch glue or securement with plastics sheeting, or sheathing, together with the provision of an outer protective sheath or outer protective face member.

Pharmaceuticals, proteins, biological samples and other temperature sensitive products, including food items, are regularly shipped in containers throughout the year and are subjected to a wide range of temperatures. Though they are shipped in insulated containers and/or climate-controlled environments, the temperature stability of the shipping containers can be significantly improved by employing the panel structures of the present invention, whereby to provide a simple solution to the maintenance of temperature profiles for the transport and storage of temperature sensitive products.

The invention is further defined as a thermally insulating laminated board comprising: a first generally planar sheet of substrate; a second generally planar sheet of substrate, an insulating sheet material operably secured between the first and second sheets; wherein the insulating material comprises one or more layers; Wherein at least one layer is provided with an array of apertures; and, wherein at least one sheet is provided with a passive reflectance layer. The one or more layers of insulating sheet material may comprise a corrugated sheet material, comprising a first backing layer and a corrugated material upon a surface thereof - it may be the case that only the corrugated material is apertured. The one or more layers of insulating sheet material may be an embossed sheet material, which embossed sheet material can be mounted with respect to a backing layer, which embossed material can be apertured. The insulating sheet material can be a low density foam material, which can be mounted with respect to a backing layer, which foam material can be apertured. A laminated board can be provided wherein one or more layers of insulating sheet material are placed between a reflective coating provided upon the layers that sandwich the insulation material. A passive reflectance coating can be provided upon the inside faces of the layers that sandwich the insulation material. Indeed, at least one layer of the insulating sheet material can be provided with a passive reflectance coating upon one or both of the sides of the insulating sheet material. The subsequent or successive layers of apertured material can be arranged such that the apertures are not identically overlapping. The first and second planar sheets of substrate comprise tubular sheets of substrate, whereby to provide a thermally insulated tube, which may have a cross-sectional form being one of a circle, ellipse, rectangle, square or other polygon. The apertures can be defined by a pattern of apertures cut or pressed from an insulating layer of material or by the spacing of strips of insulating material; the apertures can be uniformly or randomly spaced apart; the apertures comprise one of a circle, ellipse, triangle, rectangle, polyhedron or a series of parallel slots. The apertures can be defined by the spaces between two sets of diagonally offset overlapping parallel spaced apart strips of corrugate material and the first and second sets of corrugate strips can be arranged at a diagonal to the corrugate flute direction and the strips can be arranged such that the flutings thereof mesh with respect to each other. The board can be arranged such that the apertures are not present about a peripheral section of the insulation layers. The insulating board can be fastened by an adhesive. The insulating board can be secured by means of a frame secured about the outside edges of the board. The insulating board can be secured by means of envelope about the outside edges and face of the board.

The invention can be further defined as a method of creating a thermally insulating laminated board comprising the steps of: obtaining first generally planar sheet of substrate; placing an insulating sheet material operably secured between the first and second sheets; placing a second generally planar sheet of substrate; and fastening the sheets together by the use of one or more of adhesive, compression, placement in an enclosure; Wherein the sheets are generally coextensive; wherein the insulating material comprises one or more layers; wherein at least one layer is provided with an array of apertures; and, wherein at least one sheet is provided with a passive reflectance layer. Conveniently, the first generally planar sheet is placed upon a mandrel operably mounted for rotation about an axis; the first sheet being arranged about the mandrel to provide a first layer; wherein the insulating sheet is supplied as a continuous web, having a width in correspondence with the width of the first layer, being in correspondence with a desired axial length of the mandrel, whereupon the mandrel is rotated a number of time to provide a number of layers of insulating sheet; and, wherein the second sheet is applied outside the circumference of the mandrel covered by the first sheet and one or more insulating layers. The layers can be secured by being placed within an envelope; by being fastened by an adhesive by being laterally secured within an enclosure or by being placed within compression channels about their peripheral edges.

**Claims**

1. A thermally insulating laminated board (20) comprising:

a first planar sheet of substrate (22);
a second planar sheet of substrate (23);
an insulating sheet spacer material (24, 110) secured between the first and second sheets;
Wherein the insulating sheet spacer material (24, 110) comprises one or more layers;
Wherein at least one layer of the insulating sheet spacer material is provided with an array of apertures, the apertures being defined through the plane of the at least one layer; and,
Wherein at least one of the first and second planar sheets (22, 23) is provided with a passive reflectance layer.

2. A laminated board (20) according to claim 1, wherein the one or more layers of insulating sheet spacer material comprise: a corrugated sheet material, comprising a first liner and a corrugated material upon a surface thereof; an embossed sheet material, an embossed material mounted with respect to a liner layer; a low density insulating foam material; a low density insulating foam material mounted with respect to a backing layer.

3. A laminated board (20) according to claim 2, wherein, of the sheet materials provided with a liner, only the corrugated material, embossed material and low density insulating foam material of such spacing materials, respectively, are apertured.

4. A laminated board (20) according to claim 1, wherein at least one layer of the insulating sheet spacer material is provided with a passive reflectance coating upon one or both of the sides of the insulating sheet material.

5. A laminated board (20) in accordance with any one of claims 1 - 4, wherein subsequent or successive layers of apertured material are arranged such that the apertures are not identically overlapping.

6. A laminated board (20) in accordance with claim 1, wherein the first and second planar sheets of substrate comprise curviplanar sheets of substrate, whereby to provide a thermally insulated tube, tube-like or curvi-planar element, wherein the tube has a cross-sectional form being one of a circle, ellipse, rectangle, square or other polygon.

7. A laminated board (20) according to any one of claims 1-5, wherein the apertures are defined by a pattern of apertures cut or pressed from an insulating layer of material or by the spacing of strips of insulating material, wherein the apertures are uniformly or randomly spaced apart.

8. A laminated board (20) in accordance with any one of claims 1 -7, wherein the apertures comprise one of a circle, ellipse, triangle, rectangle, polygon or a series of parallel slots.

9. A laminated board (20) in accordance with claim 1, wherein the apertures are defined by the spaces between two sets of diagonally offset overlapping parallel spaced apart strips of corrugated material.

10. A laminated board (20) according to claim 9, wherein the first and second sets of corrugated strips are arranged at a diagonal to the corrugated flute direction and the strips being arranged at a corresponding such that the flutings thereof mesh with respect to each other.

11. A layered laminated board (20) in accordance with any one of claims 1 - 10, wherein the insulating board is fastened by an adhesive.

12. A layered laminated board (20) in accordance with any one of claims 1 - 10, wherein the insulating board is secured by means of a frame secured about the outside edges of the board.

13. A container manufactured from layered laminated board (20) in accordance with any one of claims 1 - 12.

14. A method of creating a thermally insulating laminated board (20) comprising the steps of:

Obtaining a first planar sheet of substrate;
placing one or more layers of an insulating sheet spacer material upon or about the first planar sheet of substrate;
placing a second planar sheet of substrate upon or about the insulating sheet material; and
fastening the sheets together by the use of one or more of adhesive, compression, placement in an enclosure;
Wherein the sheets are generally coextensive;
Wherein the at least one layer of the insulating sheet spacer material is provided with an array of apertures; and,
Wherein at least one of the first and second sheets is provided with a passive reflectance layer.

15. A method according to claim 14, wherein first planar sheet is placed upon a mandrel operably mounted for rotation about an axis; the first sheet being arranged about the mandrel to provide a first layer; wherein the insulating sheet is supplied as a continuous web, having a width in correspondence with the width of the first layer, being in correspondence with a desired axial length of the mandrel, whereupon the mandrel is rotated a number of time to provide a number of layers of insulating sheet; and, wherein the second sheet is applied outside the circumference of the mandrel covered by the first sheet and one or more insulating layers.

10

18    Figure 1

13

13

16    14    15

15    12    11

Figure 2

22

24

20

23

Figure 2a    Figure 2b

Table 1

| Properties | Units | Value |
|---|---|---|
| Material's conductivity - HOT | $W.m^{-1}.K^{-1}$ | 0.034 |
| Material's conductivity - COLD | $W.m^{-1}.K^{-1}$ | 0.030 |
| Material thickness | $mm$ | 2.5 |
| Reflector thickness | $mm$ | 0.12 |
| Gap size L_2 | $mm$ | 10 |
| Material spacing between gaps L_1 | $mm$ | 5 |
| Reflector's emissivity | | 0.1 |
| Lower temperature - HOT | $°C$ | 45 |
| Upper temperature - HOT | $°C$ | 20 |
| Lower temperature - COLD | $°C$ | 15 |
| Upper temperature - COLD | $°C$ | −10 |
| Effective thermal conductivity - HOT | $W.m^{-1}.K^{-1}$ | 0.0365 |
| Effective thermal conductivity - COLD | $W.m^{-1}.K^{-1}$ | 0.0361 |

Table 2

**Conductivity against gap size**

Figure 3

$d_{gap}$

$L_c$

$d_{ip}$

Flute direction

Figure 3a

Figure 4

$d_{gap}$

$d_{ip}$

$L_c$

Figure 5

Figure 6

## Table 3 Density

| Material | Configuration | Width | Length | Height | Weight | Density |
|---|---|---|---|---|---|---|
| Single flute corrugated board | | *mm* | | | *g* | *kg.m⁻³* |
| | 6 Layers | 203 | 203 | 31.75 | 45.80 | 35.00 |
| Board having 10x10mm apertures | 6 Layers | 203 | 203 | 31.75 | 31.68 | 24.21 |
| | 6 Layers with reflectors | 203 | 203 | 33.71 | 41.88 | 30.15 |
| Board having 40 x 40 mm apertures | 6 Layers | 203 | 203 | 31.75 | 15.6 | 11.92 |
| | 6 Layers with reflectors | 203 | 203 | 32.57 | 25.8 | 19.22 |

## Table 4 Thermal Conductivity

| | $\lambda_{cold}$ - value at mean temperature of 2.5OC $W.m^{-1}.K^{-1}$ | | $\lambda_{hot}$ - value at mean temperature of 32.5OC $W.m^{-1}.K^{-1}$ | |
|---|---|---|---|---|
| Thermaflute 6 Layers | 0.04445 | | 0.05084 | |
| Thermaflute 6 Layers with reflectors | 0.03944 | -11.5% | 0.04495 | -12.1% |
| Thermaflute 6 Layers with reflectors and holes | 0.03491 | | 0.03951 | |

Figure 8a

Figure 8b

Figure 8c

Figure 9a

Figure 9b

Figure 10

Figure 9c

Figure 11b

Figure 11a

Figure 12a

Figure 12b

Figure 12c

Figure 13a

L13a
131a

Figure 13b

L13b
131b

Figure 13c

L13c
131c

Figure 13d

L13d
131d

Figure 13e

113e
131e

Figure 14

114b
113d
113c
113b
114a
113a

Figure 15

Figure 15

Europäisches
Patentamt

European
Patent Office

Office européen
des brevets

# EUROPEAN SEARCH REPORT

Application Number

EP 24 15 5151

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/160603 A1 (PLASTIC FREE PACKAGING PTY LTD [AU]) 13 August 2020 (2020-08-13) <br> * abstract; claims 1-7 * <br> * figures 20,59,82,83 * <br> * paragraphs [0012], [0043], [0048] * <br> * paragraphs [0039] - [0052] * <br> ----- | 1-15 | INV. <br> B32B1/08 <br> B32B3/18 <br> B32B3/28 <br> B32B3/30 <br> B32B7/12 <br> B32B7/14 |
| A | CA 2 959 789 A1 (SOFTBOX SYSTEMS LTD [GB]) 28 August 2018 (2018-08-28) <br> * the whole document * <br> ----- | 1-15 | B32B29/00 <br> B32B29/08 <br> B32B3/26 <br> B32B1/00 |
| A | WO 2018/157978 A1 (SOFTBOX SYSTEMS LTD [GB]) 7 September 2018 (2018-09-07) <br> * abstract; claims 1-27 * <br> ----- | 1-15 | |

TECHNICAL FIELDS
SEARCHED (IPC)

B32B

The present search report has been drawn up for all claims

| Place of search | Date of completion of the search | Examiner |
|---|---|---|
| The Hague | 24 May 2024 | Bergmans, Koen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.....................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 5151

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2024

| Patent document cited in search report | | Publication date | Patent family member(s) | | Publication date |
|---|---|---|---|---|---|
| WO 2020160603 | A1 | 13-08-2020 | AU 2020217826 A1 | | 16-09-2021 |
| | | | CA 3128257 A1 | | 13-08-2020 |
| | | | EP 3921156 A1 | | 15-12-2021 |
| | | | SG 11202108423Q A | | 30-08-2021 |
| | | | US 2022126553 A1 | | 28-04-2022 |
| | | | WO 2020160603 A1 | | 13-08-2020 |
| CA 2959789 | A1 | 28-08-2018 | NONE | | |
| WO 2018157978 | A1 | 07-09-2018 | CA 3054746 A1 | | 07-09-2018 |
| | | | EP 3589554 A1 | | 08-01-2020 |
| | | | GB 2564178 A | | 09-01-2019 |
| | | | GB 2585317 A | | 06-01-2021 |
| | | | US 2020262637 A1 | | 20-08-2020 |
| | | | WO 2018157978 A1 | | 07-09-2018 |

EPO FORM P0459

For more details about this annex : see Official Journal of the European Patent Office, No. 12/82

**EP 4 393 694 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02085749 A
- US 4441948 A, (MacMilan Bloedel)
- WO 2005113230 A, Michael Shäpers
- GB 2585317 A